# EUROPEAN PATENT APPLICATION

(11) **EP 4 657 959 A1**
(43) Date of publication of application: **03.12.2025**
(21) Application number: 23918769.3
(22) Date of filing: 11.12.2023
(51) Int. Cl.: H04W 72/25, H04W 76/14, H04W 28/02, H04L 47/34, H04W 84/06, H04W 92/18

(54) **SIDELINK COMMUNICATION METHOD FOR CRITICAL COMMUNICATION SERVICE, AND DEVICE THEREFOR**

(30) Priority: 27.01.2023 KR 20230010986
(71) Applicant: Hyundai Mobis Co., Ltd., Gangnam-gu Seoul 06141 (KR)
(72) Inventor: CHOI, Su Han, Gwacheon-si, Gyeonggi-do 13839 (KR)
(74) Representative: Jung, Minkyu
(86) International application number: PCT/KR2023/020347
(87) International publication number: WO 2024/158134

(57) **Abstract**

The present document relates to a sidelink communication method for a critical communication service, and a device therefor. To this end, a method performed by first user equipment (UE) comprises: receiving, from a network, a first radio resource control (RRC) message containing configuration information for supporting one communication service flow through two or more bearers on a sidelink; and transmitting data to second user equipment through the two or more bearers on the sidelink on the basis of the configuration information.

## Description

### TECHNICAL FIELD

The following description relates to a method and apparatus for performing sidelink communication between user equipments (UEs) in a system stably providing an important communication service.

### BACKGROUND

Wireless communication systems use various technologies such as LTE, LTE-Advanced, and WiFi, including 5G. The three major requirement areas of 5G are (1) enhanced mobile broadband (eMBB), (2) massive machine type communication (mMTC), and (3) ultra-reliable and low latency communications (URLLC). Some use cases may require multiple areas for optimization, while other use cases may focus on only one key performance indicator (KPI). 5G supports these various use cases in a flexible and reliable manner.

Among them, URLLC includes new services that will change industries through ultra-reliable/available low-latency links, such as remote control of critical infrastructure and self-driving vehicles. The level of reliability and latency is essential for smart grid control, industrial automation, robotics, drone control, and coordination.

The URLLC technology described above may be seen as a way to provide an important communication service with ultra-reliability and low latency. Even in this case, however, a link may be disconnected due to a poor channel condition or for various reasons, and in particular, there are limitations in stably providing an important service in a high-speed, aerial situation such as an uncrewed aerial system (UAS) as well as general vehicle communication.

Meanwhile, to stably provide important services as described above, it is necessary to apply different bearer configurations not only to a link between a general base station and a user equipment, but also to a link between user equipments.

### DISCLOSURE

### TECHNICAL PROBLEM

In order to solve the above problem, one aspect of the present disclosure intends to provide a method and apparatus for stably providing an important communication service even in a situation such as a UAS.

More specifically, a method for configuring two or more bearers on a sidelink for one service flow, and a signaling method and apparatus for efficiently performing resource allocation in this case, to stably control a UAS and important communication services as well as the UAS are provided.

Moreover, roles of a direct link between an uncrewed aerial vehicle (UAV) and an UAV controller and the above-described sidelink and a method and apparatus for providing an important communication service using them, in consideration of various arrangement relationships of the UAS, are provided.

The problems which the present disclosure could solve are not limited to the problems described above, and other problems not described may be clearly understood by those skilled in the art to which the present disclosure belongs from the following description.

### TECHNICAL SOLUTION

In order to solve the above-described problem, one aspect of the present disclosure proposes a method of transmitting data to a second user equipment (UE) through a sidelink by a first UE in a mobile communication system, the method including receiving a first radio resource control (RRC) message comprising configuration information for supporting one communication service flow through two or more bearers on the sidelink from a network and
The method may further include transmitting data to the second UE through the two or more bearers on the sidelink, based on the configuration information.

The transmitting of the data may include receiving first type resource allocation information for the two or more bearers on the sidelink from the network, based on the configuration information and transmitting the data to the second UE, based on the first type resource allocation information.

In this case, it may be preferable that the data transmitted through the two or more bearers is transmitted through two or more transport blocks (TBs), and the first type resource allocation information may be received in a form of downlink control information (DCI) comprising control information for each of the two or more TBs.

On the other hand, the first type resource allocation information may be received in a form of a second RRC message comprising configured grant (CG) information for the data transmitted through the two or more bearers.

In another embodiment of the present disclosure, the transmitting of the data may include transmitting the control information for the two or more bearers on the sidelink to the second UE through first sidelink control information (SCI), based on the configuration information and transmitting second SCI to the second UE, based on the control information transmitted through the first SCI.

The first RRC message may be received to include information about the two or more bearers in a call setup process.

In this case, the method may further include receiving a third RRC message comprising information for bearer reconfiguration from the network after bearer configuration with the second UE, in which the information of the third RRC message may include information for disabling one or more of the two or more bearers.

Meanwhile, the method may further include receiving a fourth RRC message comprising information for configuring one bearer for the one communication service flow from the network in a call setup process. The first RRC message may be received from the network to include information for bearer reconfiguration for the one communication service flow, based on the fourth RRC message being received.

Meanwhile, the transmitting of the data may include transmitting data through a first bearer of the two or more bearers and transmitting additional information through a second bearer of the two or more bearers.

The first RRC message may include sidelink radio bearer configuration information, and the sidelink radio bearer configuration information may include one or more of sidelink packet data convergence protocol (PDCP) configuration information and sidelink service data adaptation protocol (SDAP) configuration information for the two or more bearers.

It may be preferable that the sidelink SDAP configuration information includes information for mapping a quality of service (QoS) flow corresponding to a specific QoS flow identifier (QFI) to two or more sidelink data radio bearers (DRBs).

The sidelink PDCP configuration information may include sequence number (SN) management information of data transmitted through the two or more sidelink DRBs.

The mobile communication system may include an uncrewed aerial system (UAS), and the one communication service flow served through the two or more bearers may include a command and control (C2) communication service flow of the UAS.

In an embodiment of the present disclosure, the first UE and the second UE may correspond to a first uncrewed aerial vehicle (UAV) and a second UAV.

In this case, the mobile communication system may include the UAS and a mobile communication service provider system, and the UAS may include an UAV controller that controls the first UAV and the second UAV.

The network may be a network of the mobile communication service provider system and control resource allocation of the UAV controller.

The UAV controller may support a direct C2 link directly supporting the C2 communication service flow without passing through one or more of the first UAV and the second UAV and the network.

The method may further include receiving, by the first UAV, system information related to a C2 communication service flow through the direct link from the network or via a relay UAV from the network.

The method may further include searching for, by the first UAV, a second UAV controller based on the system information when a channel state of the direct link with the UAV controller is worsened below a predetermined reference.

The method may further include transmitting, by the first UAV, data received through the direct link to the second UAV through two or more bearers on the sidelink.

The first UAV may transmit data provided from the UAV controller through the direct C2 link to the second UAV through the sidelink.

Separately, the first UAV may transmit data provided through an Uu interface with the network to the second UAV through the sidelink.

In another embodiment, one of the first UE and the second UE may be an uncrewed aerial vehicle (UAV), and the other of the first UE and the second UE may be a UAV controller.

The sidelink may support communication between the UAV and the UAV controller.

In order to solve the above-described problem, another aspect of the present disclosure proposes a method of supporting sidelink communication between user equipments (UEs) by a network in a mobile communication system, the method including determining whether to support one communication service flow through two or more bearers on the sidelink and transmitting a first radio resource control (RRC) message comprising configuration information for the two or more bearers to a first UE.

According to another aspect of the present disclosure, a first user equipment (UE) configured to transmit data to a second UE through a sidelink in a mobile communication system includes at least one processor and at least one computer memory operably connectable to the at least one processor and storing instructions that, when executed, cause the at least one processor to perform operations, in which the operations include receiving a first radio resource control (RRC) message comprising configuration information for supporting one communication service flow through two or more bearers on the sidelink from a network and transmitting data to the second UE through the two or more bearers on the sidelink, based on the configuration information.

According to another aspect of the present disclosure, a network for supporting sidelink communication between user equipments (UEs) includes at least one processor and at least one computer memory operably connectable to the at least one processor and storing instructions that, when executed, cause the at least one processor to perform operations, in which the operations include determining whether to support one communication service flow through two or more bearers on the sidelink and transmitting a first radio resource control (RRC) message comprising configuration information for the two or more bearers to a first UE.

### ADVANTAGEOUS EFFECTS

According to the embodiments of the present disclosure as described above, an important communication service may be stably provided even in a situation such as a UAS.

Specifically, the present disclosure may stably provide an important communication service even on a sidelink by configuring two or more bearers on the sidelink for one important communication service flow and performing efficient resource allocation therefor.

Moreover, in consideration of various arrangement relationships of the UAS, as a first UAV transmits information received using a direct link between the first UAV and a UAV controller or information received through a network to at least one second UAV through a sidelink, a flexible and seamless communication service may be provided depending on a radio link (or channel) state.

The effects obtainable from the present disclosure are not limited to the effects described above, and other effects not described may be clearly understood by those skilled in the art to which the present disclosure belongs from the description below.

### BRIEF DESCRIPTION OF THE DRAWINGS

FIG. 1 is a diagram illustrating the concept of a UAS.
FIG. 2 is a diagram for describing a method of receiving a communication service by a UE, according to an embodiment of the present disclosure.
FIG. 3 is a diagram for describing a method of providing an important communication service through a sidelink by a UE, according to an embodiment of the present disclosure.
FIG. 4 is a diagram for describing an example in which resource allocation of a type of Mode 1, according to an embodiment of the present disclosure.
FIG. 5 is a diagram for describing an example in which resource allocation of a type of Mode 2, according to an embodiment of the present disclosure.
FIG. 6 is a diagram illustrating the concept of transmitting data through a duplexed bearer, according to an embodiment of the present disclosure.
FIGS. 7 and 8 are diagrams for describing a method of decoding data by a receiver, according to embodiments of the present disclosure.
FIG. 9 illustrates an example for describing in detail information of a first RRC message of FIG. 3.
FIG. 10 is a diagram for describing the concept of duplexing/multiplexing DRBs for an important communication service, according to an embodiment of the present disclosure.
FIG. 11 is a diagram for describing an arrangement relationship of a UAS, according to the current embodiment of the present disclosure.
FIG. 12 illustrates wireless devices applicable to the present technology.

### DETAILED DESCRIPTION

With reference to the attached drawings, embodiments of the present disclosure will be described in detail so that those skilled in the art may easily implement the present disclosure. However, the present disclosure may be implemented in various different forms and is not limited to the embodiments described herein. In addition, in order to clearly describe the present disclosure, parts that are not related to the description are omitted in the drawings, and similar parts are given similar reference numerals throughout the specification.

Throughout the specification, when it is said that a part "includes" a certain component, this does not mean that other components are excluded, but that other components may be additionally included, unless otherwise specifically stated.

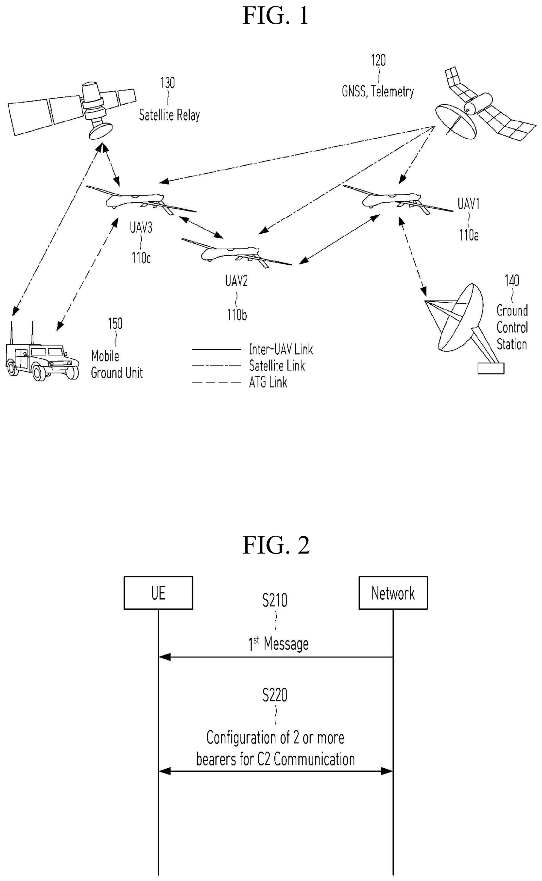

FIG. 1 is a diagram illustrating the concept of a UAS.

As illustrated in FIG. 1, the UAS may include one or more uncrewed aerial vehicles (UAVs) 110a, 110b, and 110c (e.g., drones) and at least one ground control station 140 (or a ground control center or a ground control server) that manages them, and may be linked to a mobile communication service provider system to provide an efficient communication service to the UAV(s).

In the following description, a 'mobile communication system' is assumed to be a concept including a mobile communication service provider system operated by a conventional mobile communication service provider, and a UAS. In such a mobile communication system, a conventional mobile communication service and a UAS service may be defined by a single communication standard (e.g., the 3GPP standard).

A network described below may operate to link the mobile communication service provider system to the UAS. That is, in the following description, the network is assumed to be a concept including a network of the mobile communication service provider system and a network for the UAS.

The UAVs 110a, 110b, and 110c may be used as a general concept for unmanned aerial logistics and/or transportation means capable of vertical takeoff and landing, which is only an embodiment. According to another embodiment of the present disclosure, the UAVs 110a, 110b, and 110c may be used as a concept that further includes manned aerial logistics and/or transportation means capable of vertical takeoff and landing.

The mobile communication system may be configured to include a network including a base station (BS) and a core network (CN), and various user devices liked to the network. Hereinafter, various user devices linked to the network will be collectively referred to as "user equipments (UEs)", for the convenience of description.

In an embodiment, the network may be linked to the ground control station 140 and additionally linked to a global navigation satellite system (GNSS) 120 for providing location information and/or a satellite relay 130 for satellite communication.

In an embodiment, the UE may be provided with a global positioning system (GPS) receiver and directly receive a signal from the GNSS 120 and/or the satellite relay 130.

In another embodiment, the network may be used as a general concept including all of BSs, a CN, and the ground control station 140. In this case, the mobile communication system may be used as a concept including the UAS.

UEs receiving a communication service from the UAS may include not only the UAVs 110a, 110b, and 110c described above, but also a mobile ground unit 150. That is, the 'UEs' are assumed to be the UAVs 110a, 110b, and 110c for convenience in the following description, to which the UEs are not limited, and do not exclude the mobile ground unit 150 as illustrated in FIG. 1 or a general mobile phone/smartphone.

In FIG. 1, inter-UAV links may be established among the UAVs 110a, 110b, and 110c and correspond to sidelinks in the 3^{rd} Generation Partnership Project (3GPP). The UASs 110a, 110b, and 110c may establish satellite links with the satellite units 120 and 130 and be connected to the ground units 140 and 150 via aerial to ground (ATG) links.

FIG. 2 is a diagram for describing a method of receiving a communication service by a UE, according to an embodiment of the present disclosure.

In 3GPP mobile communication to date, one bearer is configured and used for one specific service in a process of transmitting service data for one UE. However, the current embodiment proposes a method of providing a command and control (C2) communication service to monitor in real time an operation state of a UAV via a ground network or remotely control the UAV and configuring and using two or more bearers for an important communication service such as a C2 communication service, in one C2 communication service flow, at the ground control station 140 of the UAS.

In the current embodiment, the importance of a communication service may be determined based on at least one of delay characteristics required for the service, security characteristics (or level) required for the service, whether it is related to the safety of operation (or driving), a data transmission error rate required for the service, or the reliability of link maintenance required for the service, to which the present disclosure is not limited, and the determination may be made by additionally considering various service characteristics according to the design of those of ordinary skill in the art.

Configuring a radio bearer (RB) means a process of defining the characteristics of radio protocol layers and channels and setting each specific parameter and operation method in order to provide a specific service. RBs may be divided into two types, signaling radio bearer (SRB) and data radio bearer (DRB). The SRB is used as a path for transmitting an RRC message in the control plane, and the DRB is used as a path for transmitting user data in the user plane.

To this end, it is proposed that in a mobile communication system including a UAS (or linked to the UAS via a network), when a UE receives a first message including bearer-related information, that is, information for bearer configuration or reconfiguration from a network (S210) and configures bearers with the network based on the first message (S220), as shown in FIG. 2, two or more RBs are configured for a C2 communication service of the UAS, for example, for one service flow/bearer/session for the C2 communication service. Preferably, the bearer-related information included in the first message includes information for configuring two or more bearers for one service flow for one C2 communication service flow of the UAS.

The first message may be a radio resource control (RRC) reconfiguration message.

While the description of FIG. 2 has been made assuming that the first message (S210) is an RRC message, to which the present disclosure is not limited, the first message (S210) may be system information or a non-access-stratum (NAS) message.

That is, the UE may receive a quality of service (QoS) rule for mapping two or more DRBs to a QoS flow corresponding to a specific QoS flow identifier (QFI) through the NAS message (S210) received by the UE in the PDU session setup or change procedure, and thus the network may provide a C2 communication service through two or more DRBs.

The RRC layer is defined only in the control plane. The RRC layer is responsible for controlling logical channels, transport channels, and physical channels in relation to the configuration, re-configuration, and release of RBs. An RB refers to a logical path provided by a first layer (a physical layer or PHY layer), a second layer (a medium access control (MAC) layer), a radio link control (RLC) layer, and a packet data convergence protocol (PDCP) layer, for data transmission between the UE and the network.

When an RRC connection is established between the RRC layer of the UE and the RRC layer of the BS, the UE is in an RRC_CONNECTED state, and otherwise, it is in an RRC_IDLE state. In NR, an RRC_INACTIVE state is additionally defined, and a UE in the RRC_INACTIVE state may maintain a connection, for example, a session with a CN, while releasing a connection, for example, a radio link with the base station. This allows the UE to receive a fast communication service by establishing a radio link as needed without performing a separate session setup procedure in the RRC_INACTIVE state.

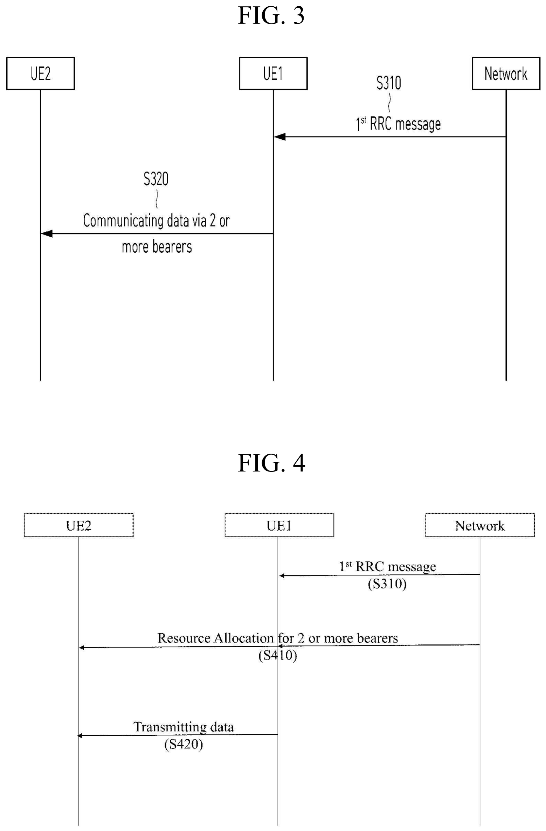

FIG. 3 is a diagram for describing a method of providing an important communication service through a sidelink by a UE, according to an embodiment of the present disclosure.

First, the UE may receive a first RRC message including configuration information for supporting one communication service flow two or more bearers on a sidelink from a network (S310). The first RRC message may include information (e.g., synchronization information) for sidelink configuration between UEs, and may include configuration information common to Mode 1/Mode 2 for a resource allocation type. For example, in the current 5G communication service, the first RRC message may include a system information block (SIB) 19, but a detailed message format is not limited thereto.

Based on the above-described configuration information, a first UE may transmit data to a second UE through two or more bearers on the sidelink (S320). In the current embodiment, it is assumed that transmitting data through two or more bearers on the sidelink as described above may support both Mode 1/Mode 2 as a sidelink resource allocation type.

In Mode 1, resource allocation is performed by a network and is mainly used when UEs are in an in-coverage situation or a partial coverage situation.

In Mode 2, resource allocation is determined by a UE and may be used when UEs are in an out-of-coverage situation, but may also be used without a limitation even in the in-coverage/partial coverage situation described above.

FIG. 4 is a diagram for describing an example in which resource allocation of a type of Mode 1, according to an embodiment of the present disclosure.

In the embodiment shown in FIG. 4, receiving the first RRC message (S310) may be common to an example of FIG.. 3.

In the current embodiment, it is assumed that Mode 1 is used as a resource allocation type, which assumes that at least one of the first UE/the second UE is in the in-coverage situation. In the example of FIG. 4, the first UE receives the first RRC message in a coverage of the network.

In the current embodiment according to Mode 1, data transmission may be characterized by receiving first type resource allocation information for two or more bearers on the sidelink from the network (S410). That is, according to Mode 1, resource allocation may be performed by a network (e.g., gNB), based on which the first UE may transmit data to the second UE (S420).

The resource allocation type according to Mode 1 may be divided into, specifically, a dynamic resource allocation type using a downlink control information (DCI) and a configured grant (CG) type using RRC signaling.

When resource allocation is performed using the dynamic resource allocation type, a new DCI format for supporting two or more bearers may be proposed or improvement of an existing DCI format may be required. For example, it is preferable that according to an embodiment where data transmitted through two or more bearers is transmitted through two or more transport blocks (TBs), a DCI format for supporting the transmission includes control information for each of the two or more TBs, as in the embodiment described below. That is, when the bearer is duplexed and TB #1 and TB #2 respectively transmit data of the duplexed bearer, a corresponding DCI may include information for controlling one or more of resource allocation, decoding, and a feedback method of each of TB #1 and TB #2.

When the CG type is used, the second RRC message including information for semi-static resource allocation may be received by UE 1/UE 2 (S410). In the CG type, both a type 1 in which resource allocation is performed by the above-described second RRC message and a type 2 in which the second RRC message is periodically received and activation of the configuration information is performed through a DCI may be selectively used.

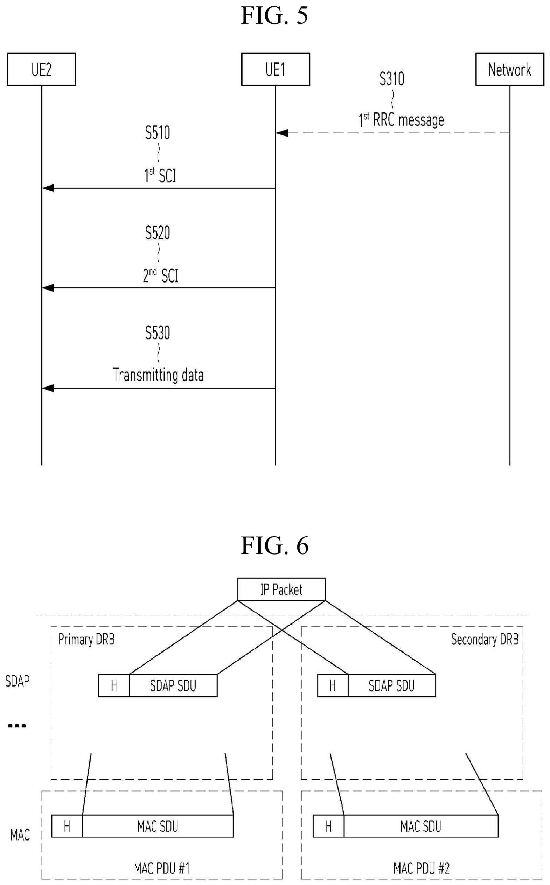

FIG. 5 is a diagram for describing an example in which resource allocation of a type of Mode 2, according to an embodiment of the present disclosure.

In the embodiment shown in FIG. 5, receiving the first RRC message (S310) may be common to an example of FIG.. 3. However, the resource allocation type of Mode 2 shown in FIG. 5 may also be used in the out-of-coverage situation, and in this case, receiving the first RRC message (S310) may receiving information from a network before movement of the first UE or from another UE.

As shown in FIG. 5, the first UE, when operating in Mode 2, may determine resource allocation information to transmit control information about two or more bearers on the sidelink to the second UE through first sidelink control information (SCI) (S510). The first SCI is transmitted through a physical sidelink control channel (PSCCH) and includes resource allocation information about control information/data to be transmitted later through a physical sidelink shared channel (PSSCH).

Thereafter, the first UE may transmit second SCI to the second UE (S520). The second SCI may include control information about data to be transmitted and may be transmitted through the PSSCH. The first UE may transmit data to the second UE based thereon (S530).

FIG. 6 is a diagram illustrating the concept of transmitting data through a duplexed bearer, according to an embodiment of the present disclosure.

As shown in FIG. 6, the current embodiment proposes repeatedly transmitting single data (e.g., an Internet protocol (IP) packet) for an important communication service such as a C2 communication service to two or more DRBs. The important communication service may include various examples such as data for an important service for V2X control as well as C2 communication and a remote medical service, but the description will be made of the C2 communication service as an example for convenience.

As illustrated in FIG. 6, when two DRBs are used, one DRB may be set as a primary DRB and the other DRB may be set as a secondary DRB. A service data adaptation protocol (SDAP) may perform DRB mapping such that an IP packet being service data for C2 communication may be repeatedly transmitted through the primary DRB and the secondary DRB.

The size of user data used for C2 communication is relatively small, compared to user data used for a general mobile communication service, such as a video call, file download, video/audio streaming, web access, etc. For example, data used in the C2 communication service may include sensing data for real-time monitoring of a UAV operation state, various command data for remotely adjusting and/or controlling a UAV, operation support data related to a congestion state of a vertiport, a corridor, etc., and so forth. Therefore, in the case of C2 communication, even if the same IP packet is mapped to two DRBs and repeatedly transmitted as illustrated in FIG. 6, resource use and complexity do not significantly increase.

When the same data is mapped to two or more DRBs and repeatedly transmitted as described above, the PDCP layer may perform a management function to avoid duplication and omission between data through a PDCP sequence number (SN).

In addition, an embodiment of the present disclosure proposes that one MAC PDU used for transmitting a corresponding IP packet does not include data of two or more DRBs. That is, unlike a general communication service in which one MAC PDU may transmit SDUs from two RBs by multiplexing them, it is preferable to configure one MAC PDU to include only an SDU from one DRB in an embodiment of the present disclosure as illustrated in FIG. 6. That is, in C2 communication, DRBs and MAC PDUs may be configured to be mapped in a one-to-one correspondence. This is because when two or more RBs are used to secure stability and reliability for an important service such as the C2 communication service, if data mapped to these two or more RBs are transmitted in one MAC PDU TB, the intended service stability and reliability are not secured.

When the method of transmitting the same data through two DRBs is used as illustrated in FIG. 6, one DRB may be transmitted using a frequency resource with a good channel condition, and the other DRB may be transmitted by applying frequency hopping. In general, frequency hopping is a technique of performing communication by changing a main frequency (or carrier frequency) used for data communication in a transmitter/receiver in a wireless network according to a certain function. As frequency hopping is a technique of performing communication by continuously changing a frequency, it has the advantage of not only stably maintaining a communication link in spite of external interference at a specific frequency, but also effectively preventing wiretapping and hacking.

In the case of UAVs, there is a possibility that a link that wirelessly controls or adjusts a UAV may be disconnected or maliciously manipulated by a coordinator with bad intentions. Therefore, maintaining a secondary link, i.e., a secondary DRB, as well as a main link, i.e., a primary DRB, may be very important to cope with such a case. For example, when two links, i.e., two DRBs, are set for a sidelink, it may be efficient to apply frequency hopping to one link or to both links. For example, when frequency hopping is applied to both links, frequency hopping patterns respectively applied to the links may be different from each other, but this is only an embodiment, and in another embodiment, the frequency hopping patterns applied to the two links may be the same.

To this end, to transmit sidelink control information as described above, DCI/SCI that is resource allocation information may include different resource allocation information for two or more links.

In another embodiment of the present disclosure, although two or more bearers may be configured for one C2 communication in the same manner, data may be transmitted only through the primary bearer, and only the secondary bearer may play an auxiliary role such as transmitting a feedback signal for the data transmitted through the primary bearer, unlike the example of FIG. 6.

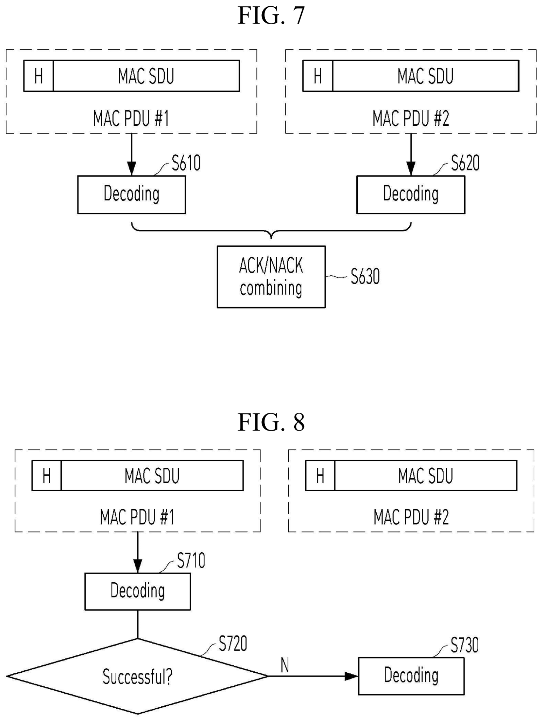

FIGS. 7 and 8 are diagrams for describing a method of decoding data by a receiver, according to embodiments of the present disclosure.

Specifically, FIG. 7 is based on the assumption that one IP packet for one C2 communication is mapped to two DRBs and repeatedly received by a receiver through MAC PDU #1 and MAC PDU #2. In the embodiment illustrated in FIG. 7, it is proposed that the receiver having received the MAC PDUs performs decoding on both MAC PDUs (S610 and S620).

The receiver needs to transmit a feedback signal (e.g., ACK/NACK) to a transmitter based on a decoding result, and may determine the feedback signal by determining each of the decoding results of the two MAC PDUs MAC PDU #1 and MAC PDU #2 (S630). For example, the receiver may be configured to determine that data for the corresponding C2 communication has been normally obtained and thus transmit an ACK, even if any one of the two MAC PDUs (MAC PDU #1 and MAC PDU #2) is successfully decoded, and transmit a NACK only when both the MAC PDUs fail to be decoded.

Compared to the embodiment of FIG. 8, the receiver may be configured to decode only a MAC PDU (MAC PDU #1) received through the primary DRB out of the two MAC PDUs (MAC PDU #1 and MAC PDU #2) (S710) in the embodiment of FIG. 7. When the receiver succeeds in decoding the corresponding MAC PDU (MAC PDU #1), it may feed back an ACK to the transmitter without the need to decode MAC PDU #2.

However, when the receiver fails in decoding MAC PDU #1, it may additionally decode (MAC PDU #2) (S730).

While the method of the embodiment illustrated in FIG. 8 has been illustrated/described on the assumption that the same data is received from two DRBs (primary DRB and secondary DRB), the UE according to the current embodiment may operate to primarily receive only a MAC PDU through the primary DRB, and receive the subsequent MAC PDU #2 through the secondary DRB according to the failure of decoding of MAC PDU #1. When the transmitter performs a retransmission through a DRB different from a DRB used for an initial transmission, the receiver may obtain a diversity gain by using the initially received MAC PDU #1 and the retransmitted MAC PDU #2.

The process of performing communication through the duplexed/multiplexed bearer on the sidelink for the important communication service through the first RRC message of FIG. 3 has been described in the above-described embodiments, and use of the duplexed/multiplexed bearer may be performed immediately in an initial setup process of the sidelink and one bearer may be used and subsequently, a bearer may be added for one service flow, in the initial setup process. Moreover, when one important communication service is supported using two or more bearers, one or more of two bearers may be disabled in view of resource efficiency as a channel state is improved.

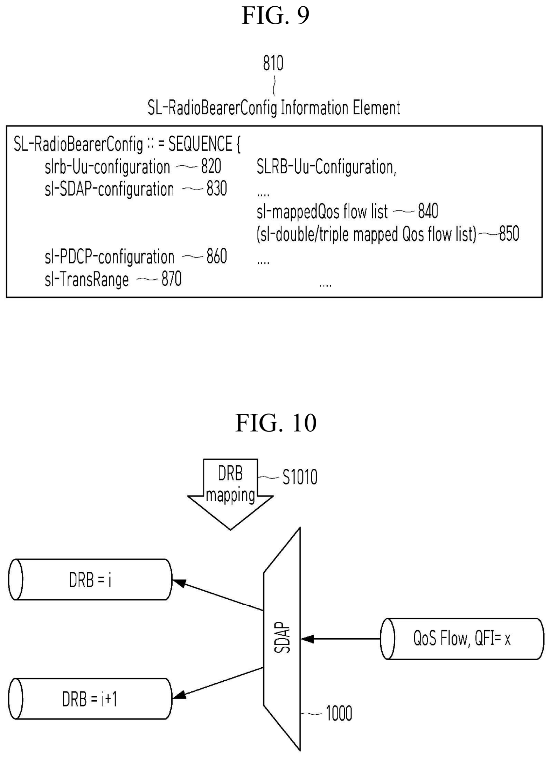

FIG. 9 illustrates an example for describing in detail information of a first RRC message of FIG. 3.

The first RRC message for configuring two or more bearers for one important communication service on the sidelink may include a sidelink radio bearer configuration information element (SL-RadioBearerConfig Information Element, 810) as illustrated in FIG. 9.

Preferably, a sidelink radio bearer configuration information element (810) may include one or more of sidelink PDCP configuration information (860) and sidelink SDAP configuration information (830) for two or more bearers. In the example of FIG. 9, by referring to the sidelink radio bearer configuration information element (810) of the current Release 18, configuration information (820) and sidelink transmission range information (870) between a sidelink RB and an Uu interface are further included, but the configuration information (820) and the sidelink transmission range information (870) between the sidelink Rb and the Uu interface may be selectively included in the subsequent Release standardization to which the current embodiment is to be applied.

In relation to the current embodiment, specifically, it is preferable that a sidelink SDAP configuration information (830) includes information for mapping a QoS flow corresponding to a specific QFI to two or more sidelink DRBs, and FIG. 9 shows an example in which a mapped sidelink QoS flow list 840 may include such information or a separately duplexed/multiplexed mapped QoS flow list (850) is included.

Sidelink PDCP configuration information (860) may include SN management information of data transmitted through two or more sidelink DRBs.

FIG. 10 is a diagram for describing the concept of duplexing/multiplexing DRBs for an important communication service, according to an embodiment of the present disclosure.

In FIG. 10, a transmitting device that transmits data may be a first UE. As illustrated in FIG. 10, the transmitting device may manage transmission data on a QoS flow basis, and to this end, assign an ID (QoS flow ID (QFI)) to each QoS flow. Accordingly, a specific entity (e.g., an SDAP (500)) of the transmitting device may perform DRB mapping (S1010) based on a QFI.

According to the current 5G standardization, there was no case of mapping a QoS flow corresponding to one QFI to two or more DRBs during the DRB mapping (S1010) of the SDAP.

However, in the present embodiment, a specific QFI (e.g., QFI = x) corresponding to an important communication service such as the C2 communication service of the UAS as described above may be defined, and it is proposed that for a QoS flow having the specific QFI, the corresponding service is provided by mapping the QoS flow to two or more DRBs, as illustrated in FIG. 10. The service with the specific QFI(=x) mapped to two or more DRBs does not need to be limited to the C2 communication of the UAS described above. For example, in vehicle-to-everything (V2X) communication, a specific service requiring stability among services currently defined as ultra-reliable low-latency communication (URLLC) may operate by mapping it to a QFI for which DRB duplication/multiplexing is performed as described above.

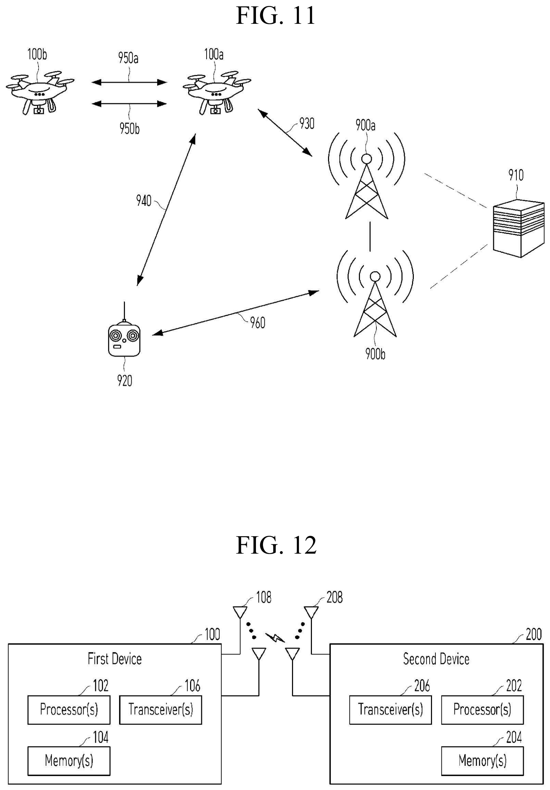

FIG. 11 is a diagram for describing an arrangement relationship of a UAS, according to the current embodiment of the present disclosure.

In the embodiment of FIG. 11, a detailed description will be made by being limited to a case where a mobile communication system includes a UAS and one communication service flow served through two or more bearers is a C2 communication service flow of the UAS.

First, in the above-described embodiments, the first UE and the second UE may correspond to a first UAV (100a) and a second UAV (100b) in the example of FIG. 11. A sidelink between the first UAV (100a) and the second UAV (100b) may support duplexed/multiplexed bearers (950a, 950b) for C2 communication.

In the example of FIG. 11, it is assumed that the mobile communication system includes a mobile communication service provide as well as a UAS and networks (900a, 900b, e.g., gNB) of the mobile communication service provider may control resource allocation of components of the UAS.

Preferably, the UAS according to the current embodiment includes a UAV controller (920) for controlling the first UAV (100a) and the second UAV (100b). The UAS may further include an uncrewed aerial system traffic management (UTM, 910) for controlling ranges of autonomous operations of the first UAV (100a) and the second UAV (100b).

The UAV controller (920) may support a direct C2 link (940) directly supporting a C2 communication service flow without passing through one or more of the first UAV (100a) and the second UAV (100b) and the networks (900a, 900b).

That is, the C2 communication may include (A) a direct C2 link (940) between the UAV controller (920) and the UAV (100), (B) a link (960) between the UAV controller (920) and the network (900) and a network support C2 link performing C2 communication with the UAV (100) via a link (930) between the network and the UAV, (C) an ATM navigate C2 link for an ATM (910) to control a path of the UAV (100), and (D) a C2 link (950) using a sidelink between UAVs.

In a preferred embodiment of the present disclosure, it is proposed that C2 links of (A) to (D) may be switched to each other depending on a situation and duplexing/multiplexing of a bearer may be used depending on a need. The links (A) to (D) may be used interchangeably with each other.

Generally, in the UAS, the direct link (940) between the UAV controller (920) and the UAV (100) may follow an independent communication scheme that is different from the sidelink (950) of a mobile communication provider system. In this case, the direct link (940) between the UAV controller (920) and the UAV (100) corresponds to a separate link distinct from the sidelink (950) of the 3GPP.

In such a case, the first UAV (100a) may transmit data provided from the UAV controller (920) through the direct C2 link (940) to the second UAV (100b) through the sidelink (950) in which the bearer of the sidelink (950) may be duplexed/multiplexed.

Meanwhile, the first UAV (100a) may transmit data provided through the Uu interface with the network (900a) to the second UAV (100b) through the sidelinks (950a, 950b) in which the bearer of the sidelink (950) may be duplexed/multiplexed.

In another embodiment of the present disclosure, the UAV controller (920) may also be configured to correspond to a UE of a mobile communication provider system (e.g., a 3GPP system). In this case, the link (940) between the UAV controller (920) and the UAV (100a) of FIG. 11 may also correspond to the sidelink of the 3GPP system, and according to an embodiment described above, the sidelink (940) may be duplexed/multiplexed.

The first UAV (100a) according to another embodiment of the present disclosure may previously receive system information related to the direct C2 link (940) from the network so as to receive a C2 service without passing through the network. For example, the information related to the direct C2 link (940) may be received from the network through a specific system information block (SIB) or RRC message. In another example, a case where the information related to the direct C2 link (940) is an adjacent UAV (not shown, the second UAV (100b)) is not excluded, but the information may also be received from an appropriate relay UAV through the sidelink according to a geographical location.

In the above-described example, the system information for the direct C2 link is not limited to the information about the direct C2 link with the specific UAV controller (920), and may include information about the direct C2 link with the arbitrary UAV controller.

For example, when the channel state of the direct C2 link (940) with the UAV controller (920) is worsened below a predetermined reference, an accessible UAV controller (or an UAV control server or an UAV backhaul relay) based on the previously received system information may be searched and an additional direct C2 link may be configured with the found UAV controller (or the UAV backhaul relay). Herein, the UAV backhaul relay may provide UAV edge computing.

The first UAV (100a) in which the direct C2 link (940 or the additional direct C2 link) is configured may configure the sidelinks (950a, 950b) with one or more adjacent second UAVs (100b) and provide the C2 service to at least one second UAV (100b). In this case, after the first UAV (100a) transmits SCI for configuring a plurality of bearers for a corresponding C2 service to the at least one second UAV (100b), the first UAV (100a) may transmit data received through the direct C2 link to the at least one second UAV through the configured sidelinks (950a, 950b).

According to a preferred embodiment, the first UAV (100a) measures a radio channel state with a network and performs the above-described direct C2 link configuration procedure when determining that the measured radio channel state is not enough to provide the C2 service.

The first UAV (100a) may directly perform a C2 link configuration procedure when a delay required for a corresponding service flow is less than or equal to a predetermined threshold value.

FIG. 12 illustrates wireless devices applicable to the present technology.

Referring to FIG. 12, a first wireless device 100 and a second wireless device 200 may transmit radio signals through a variety of radio access technologies (RATs) (e.g., E-UTRA and NR). Herein, the first wireless device 100 and the second wireless device 200 may correspond to the UE and the network of FIG. 1, respectively. Specifically, the first wireless device 100 and the second wireless device 200 may be applied to various devices located at both ends of a communication link of the UAS illustrated in FIGS. 1 or 10.

The first wireless device 100 may include at least one processor 102 and at least one memory 104 and further include at least one transceiver 106 and/or at least one antenna 108. The processor 102 may be configured to control the memory 104 and/or the transceiver 106 and implement the description, functions, procedures, proposals, methods, and/or operational flowcharts disclosed in the present disclosure. For example, the processor 102 may process information within the memory 104 to generate first information/signal and then transmit a radio signal including the first information/signal through the transceiver 106. Further, the processor 102 may receive a radio signal including second information/signal through the transceiver 106 and then store information obtained by processing the second information/signal in the memory 104. The memory 104 may be connected to the processor 102 and store various pieces of information related to operations of the processor 102. For example, the memory 104 may store software code including commands for performing some or all of processes controlled by the processor 102 or for performing the description, functions, procedures, proposals, methods, and/or operational flowcharts disclosed in the present disclosure. The processor 102 and the memory 104 may be a part of a communication modem/circuit/chip designed to implement RATs (e.g., LTE E-UTRA or 5G NR). The transceiver 106 may be connected to the processor 102 and transmit and/or receive a radio signal through the at least one antenna 108. The transceiver 106 may include a transmitter and/or a receiver. The transceiver 106 may be interchangeably used with a radio frequency (RF) unit. In the present disclosure, the wireless device may refer to a communication modem/circuit/chip.

The second wireless device 200 may include at least one processor 202 and at least one memory 204 and further include at least one transceiver 206 and/or at least one antenna 208. The processor 202 may be configured to control the memory 204 and/or the transceiver 206 and implement the description, functions, procedures, proposals, methods, and/or operational flowcharts disclosed in the present disclosure. For example, the processor 202 may process information within the memory 204 to generate third information/signal and then transmit a radio signal including the third information/signal through the transceiver 206. Further, the processor 202 may receive a radio signal including fourth information/signal through the transceiver 206 and then store information obtained by processing the fourth information/signal in the memory 204. The memory 204 may be connected to the processor 202 and store various pieces of information related to operations of the processor 202. For example, the memory 204 may store software code including commands for performing some or all of processes controlled by the processor 202 or for performing the description, functions, procedures, proposals, methods, and/or operational flowcharts disclosed in the present disclosure. The processor 202 and the memory 204 may be a part of a communication modem/circuit/chip designed to implement RATs (e.g., LTE E-UTRA or 5G NR). The transceiver 206 may be connected to the processor 202 and transmit and/or receive a radio signal through the at least one antenna 208. The transceiver 206 may include a transmitter and/or a receiver. The transceiver 206 may be interchangeably used with an RF unit. In the present disclosure, the wireless device may refer to a communication modem/circuit/chip.

Hereinafter, hardware elements of the wireless devices 100 and 200 will be described more specifically. One or more protocol layers may be implemented by, but are not limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more protocol data units (PDUs) and/or one or more service data units (SDUs) according to the description, functions, procedures, proposals, methods, and/or operational flowcharts disclosed in the present disclosure. The one or more processors 102 and 202 may generate messages, control information, data, or information according to the description, functions, procedures, proposals, methods, and/or operational flowcharts disclosed in the present disclosure. The one or more processors 102 and 202 may generate signals (e.g., baseband signals) including PDUs, SDUs, messages, control information, data, or information according to the description, functions, procedures, proposals, methods, and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and obtain the PDUs, SDUs, messages, control information, data, or information according to the description, functions, procedures, proposals, methods, and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The description, functions, procedures, proposals, methods, and/or operational flowcharts disclosed in the present disclosure may be implemented using firmware or software and the firmware or software may be configured to include the modules, procedures, or functions. Firmware or software configured to perform the description, functions, procedures, proposals, methods, and/or operational flowcharts disclosed in the present disclosure may be included in the one or more processors 102 and 202 or stored in the one or more memories 104 and 204 so as to be driven by the one or more processors 102 and 202. The description, functions, procedures, proposals, methods, and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured as read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located inside and/or outside of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the description, functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may control the one or more transceivers 106 and 206 to transmit user data, control information, or radio signals to one or more other devices. The one or more processors 102 and 202 may control the one or more transceivers 106 and 206 to receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the description, functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels from RF band signals into baseband signals in order to process received user data, control information, and radio signals/channels, using the one or more processors 102 and 202. The one or more transceivers 106 and 206 may convert the user data, control information, and radio signals/channels, processed using the one or more processors 102 and 202 from the base band signals into the RF band signals. To this end, the one or more transceivers 106 and 206 may include (analog) oscillators and/or filters.

The detailed description of the preferred embodiments of the present disclosure disclosed above has been provided to enable those skilled in the art to implement and practice the present disclosure. Although the above description has been given with reference to preferred embodiments of the present disclosure, it will be understood by those skilled in the art that various modifications and changes may be made to the present disclosure without departing from the scope of the present disclosure. For example, those skilled in the art may use configurations described in the above-described embodiments in combination.

Accordingly, the present disclosure is not intended to be limited to the embodiments shown herein, but is intended to have the broadest scope consistent with the principles and novel features disclosed herein.

### INDUSTRIAL APPLICABILITY

The method and apparatus for applying a bearer configuration for stably providing an important communication service to a sidelink according to the embodiments of the present disclosure as described above may be used in a communication system that supports an important service such as a C2 communication service of a UAS according to various communication protocols as well as the 3GPP.

## Claims

1. A method of transmitting data to a second user equipment (UE) through a sidelink by a first UE in a mobile communication system, the method comprising:
receiving a first radio resource control (RRC) message comprising configuration information for supporting one communication service flow through two or more bearers on the sidelink from a network; and
transmitting data to the second UE through the two or more bearers on the sidelink, based on the configuration information.

2. The method of claim 1, wherein the transmitting of the data comprises:
receiving first type resource allocation information for the two or more bearers on the sidelink from the network, based on the configuration information; and
transmitting the data to the second UE, based on the first type resource allocation information.

3. The method of claim 2, wherein the data transmitted through the two or more bearers is transmitted through two or more transport blocks (TBs), and
the first type resource allocation information is received in a form of downlink control information (DCI) comprising control information for each of the two or more TBs.

4. The method of claim 2, wherein the first type resource allocation information is received in a form of a second RRC message comprising configured grant (CG) information for the data transmitted through the two or more bearers.

5. The method of claim 1, wherein the transmitting of the data comprises:
transmitting the control information for the two or more bearers on the sidelink to the second UE through first sidelink control information (SCI), based on the configuration information; and
transmitting second SCI to the second UE, based on the control information transmitted through the first SCI.

6. The method of claim 1, wherein the first RRC message is received to include information about the two or more bearers in a call setup process.

7. The method of claim 6, further comprising receiving a third RRC message comprising information for bearer reconfiguration from the network after bearer configuration with the second UE,
wherein the information of the third RRC message comprises information for disabling one or more of the two or more bearers.

8. The method of claim 1, further comprising receiving a fourth RRC message comprising information for configuring one bearer for the one communication service flow from the network in a call setup process,
wherein the first RRC message is received from the network to include information for bearer reconfiguration for the one communication service flow, based on the fourth RRC message being received.

9. The method of claim 1, wherein the transmitting of the data comprises:
transmitting data through a first bearer of the two or more bearers; and
transmitting additional information through a second bearer of the two or more bearers.

10. The method of claim 1, wherein the first RRC message comprises sidelink radio bearer configuration information, and
the sidelink radio bearer configuration information comprises one or more of sidelink packet data convergence protocol (PDCP) configuration information and sidelink service data adaptation protocol (SDAP) configuration information for the two or more bearers.

11. The method of claim 10, wherein the sidelink SDAP configuration information comprises information for mapping a quality of service (QoS) flow corresponding to a specific QoS flow identifier (QFI) to two or more sidelink data radio bearers (DRBs).

12. The method of claim 11, wherein the sidelink PDCP configuration information comprises sequence number (SN) management information of data transmitted through the two or more sidelink DRBs.

13. The method of claim 1, wherein the mobile communication system comprises an uncrewed aerial system (UAS), and
the one communication service flow served through the two or more bearers comprises a command and control (C2) communication service flow of the UAS.

14. The method of claim 13, wherein the first UE and the second UE correspond to a first uncrewed aerial vehicle (UAV) and a second UAV.

15. The method of claim 14, wherein the mobile communication system comprises the UAS and a mobile communication service provider system, and
the UAS comprises an UAV controller that controls the first UAV and the second UAV.

16. The method of claim 15, wherein the network is a network of the mobile communication service provider system and controls resource allocation of the UAV controller.

17. The method of claim 16, wherein the UAV controller supports a direct C2 link directly supporting the C2 communication service flow without passing through one or more of the first UAV and the second UAV and the network.

18. The method of claim 17, further comprising receiving, by the first UAV, system information related to a C2 communication service flow through the direct link from the network or via a relay UAV from the network.

19. The method of claim 18, further comprising searching for, by the first UAV, a second UAV controller based on the system information when a channel state of the direct link with the UAV controller is worsened below a predetermined reference.

20. The method of claim 17, further comprising transmitting, by the first UAV, data received through the direct link to the second UAV through two or more bearers on the sidelink.

21. The method of claim 17, wherein the first UAV transmits data provided from the UAV controller through the direct C2 link to the second UAV through the sidelink.

22. The method of claim 17, wherein the first UAV transmits data provided through an Uu interface with the network to the second UAV through the sidelink.

23. The method of claim 13, wherein one of the first UE and the second UE is an uncrewed aerial vehicle (UAV), and
the other of the first UE and the second UE is a UAV controller.

24. The method of claim 23, wherein the sidelink supports communication between the UAV and the UAV controller.

25. A method of supporting sidelink communication between user equipments (UEs) by a network in a mobile communication system, the method comprising:
determining whether to support one communication service flow through two or more bearers on the sidelink; and
transmitting a first radio resource control (RRC) message comprising configuration information for the two or more bearers to a first UE.

26. A first user equipment (UE) configured to transmit data to a second UE through a sidelink in a mobile communication system, the first UE comprising:
at least one processor; and
at least one computer memory operably connectable to the at least one processor and storing instructions that, when executed, cause the at least one processor to perform operations,
wherein the operations comprise:
receiving a first radio resource control (RRC) message comprising configuration information for supporting one communication service flow through two or more bearers on the sidelink from a network; and
transmitting data to the second UE through the two or more bearers on the sidelink, based on the configuration information.

27. A network for supporting sidelink communication between user equipments (UEs), the network comprising:
at least one processor; and
at least one computer memory operably connectable to the at least one processor and storing instructions that, when executed, cause the at least one processor to perform operations,
wherein the operations comprise:
determining whether to support one communication service flow through two or more bearers on the sidelink; and
transmitting a first radio resource control (RRC) message comprising configuration information for the two or more bearers to a first UE.
